# DEMANDE DE BREVET EUROPEEN

(11) **EP 4 773 291 A1**
(43) Date de publication de la demande: **08.07.2026**
(21) Numéro de dépôt: 26150098.7
(22) Date de dépôt: 02.01.2026
(51) Int. Cl.: H01M 10/0565, H01M 10/42

(54) **PROCÉDÉ DE SYNTHÈSE DE COMPLEXES POLYMÉRIQUES COMPORTANT UN ANION ORGANIQUE UTILES COMME MATÉRIAUX CONDUCTEURS IONIQUES**

(30) Priorité: 06.01.2025 FR 2500085
(71) Demandeur: Commissariat à l'Énergie Atomique et aux Énergies Alternatives, 75015 Paris (FR)
(72) Inventeur: KUNERT, Romain, 38054 GRENOBLE (FR); BERNARD, Laurent, 38054 GRENOBLE (FR); PICARD, Lionel, 38054 GRENOBLE (FR)
(74) Mandataire: Ipsilon

(57) **Abrégé**

La présente invention se rapporte à un procédé pour la préparation d'un complexe de transfert de charge polymérique comprenant au moins les étapes A) et B) consistant à :
- A) mettre en contact, dans un milieu solvant et en présence d'une base de métal alcalino-terreux et/ou de métal de transition, un composé halogéné choisi parmi le chloranil, le fluoranil, le bromanil, le iodanil, avec au moins un composé de formule (III) :

NC-R^{b}-CN (III),

pour former un sel de formule (I) 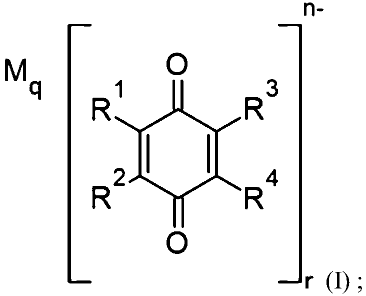 puis
- **B)** mettre en contact ledit sel avec un moins un polymère donneur d'électrons pour former un complexe de transfert de charge polymérique.

## Description

### Domaine technique

La présente invention se rapporte à de nouveaux complexes de transfert de charge polymériques comportant un anion organique, en particulier utiles comme matériaux conducteurs ioniques, notamment dans des électrolytes pour batteries et vise tout particulièrement à proposer une voie de synthèse de ces sels.

### Technique antérieure

Aujourd'hui, les batteries au lithium dominent les secteurs dans lesquels l'autonomie énergétique est un critère primordial tels que les secteurs des transports, notamment des transports électriques ou hybrides, et en particulier des véhicules individuels, de l'informatique, de la téléphonie mobile, ou de la micro-électronique. Compte-tenu de cette grande diversité d'utilisation, les attentes en termes de sécurité, de performances (amélioration de la conductivité ionique, de la stabilité électrochimique et du nombre de transport d'ions, notamment de l'ion lithium pour les batteries au lithium), et de coût des batteries sont de plus en plus exigeantes.

L'invention s'inscrit plus particulièrement au regard du développement de nouvelles générations de batteries pour l'électrisation des transports, notamment des véhicules individuels. Largement dominé par la technologie lithium-ion, le transport électrique doit envisager des nouvelles technologies pour surmonter divers obstacles technologiques face à la demande exponentiellement croissante de batteries. Les électrolytes utilisés dans les batteries au lithium sont le plus souvent liquides, et sont obtenus en dissolvant un sel très conducteur dans un solvant ou un mélange de solvants, généralement non-aqueux. Or, ces électrolytes peuvent être sujets à des emballements thermiques, et à des courts-circuits dus à l'apparition d'une croissance dendritique non maîtrisée du lithium, phénomène indésirable susceptible d'être observé au cours de la charge de la batterie.

Pour s'affranchir de ce risque d'emballement thermique, tout particulièrement indésirable pour une exploitation dans des véhicules, les électrolytes solides ou quasi-solides préparés par dissolution d'un sel très conducteur dans un polymère apparaissent comme particulièrement avantageux.

Par « électrolyte quasi-solide », on entend un électrolyte comprenant moins de 30 % en poids de phase liquide mobile par rapport à la masse totale de l'électrolyte.

En particulier, des travaux de recherche portent sur l'élaboration d'électrolytes solides organiques formés *via* synthèse de complexes de transfert de charges (CTC). K. Hatakeyama-Sato et *al.* propose de sélectionner des donneurs d'électrons, comme les polymères polysulfure de phénylène (de l'anglais *polyphenylene sulfide,* PPS) et poly(sulfure de 2-méthylphénylène) (de l'anglais *poly(2-methylphenylene sulfide,* PMPS), et des accepteurs d'électrons, comme le chloranil et le 2,3-dichloro-5,6-dicyano-1,4-benzoquinone afin de former des complexes de transfert de charge, avec le LiTFSI comme sel de lithium avec pour but de prédire les valeurs de conductivité ionique des électrolytes associés [1,2].

P. Bonnick et *al.* explorent l'incorporation de plastifiants dérivés de sulfones, incluant le sulfolane, dans des électrolytes organiques CTC basés sur le polysulfure de phénylène et le fluoranil avec le LiTFSI comme sel de lithium [3].

Cependant, ces études sont utiles uniquement pour des applications de batteries au lithium. De plus, un certain nombre des précurseurs utilisés lors de ces synthèses sont relativement onéreux et/ou toxiques. Or, à la volonté d'accroissement de performance et de sécurité, s'ajoutent également les défis environnementaux, qui poussent les industriels à se tourner vers des batteries à plus faible impact environnemental afin de s'affranchir de l'utilisation de ressources critiques, telles que le lithium.

Les documents US 2017/0018781 A1 et US 2018/0151914 A1 décrivent des électrolytes solides comprenant des donneurs et accepteurs d'électrons similaires (PPS, *polyether ether ketone* PEEK, *poly(p-phenylene oxide)* PPO, polyphthalamide PPA, chloranil, DDQ, tetracyanoethylene TCNE), avec pour applications des batteries à ions multivalents.

La recherche sur les électrolytes solides pour les batteries de nouvelles générations mettant en œuvre des ions multivalents (métaux alcalino-terreux, notamment magnésium et calcium, métaux de transition) comme porteurs de charge est encore naissante. Les électrolytes polymères pour les batteries au calcium s'inspirent pour l'instant de ceux préparés pour les batteries au lithium et utilisent principalement le poly(oxyde d'éthylène) (PEO) mélangé à des sels de calcium. Néanmoins, des recherches fondamentales et des optimisations supplémentaires sont nécessaires pour améliorer la stabilité et les conductivités ioniques à température ambiante des électrolytes.

Il demeure donc un besoin de disposer d'électrolytes quasi-solides, en particulier pour des batteries à calcium, possédant une bonne stabilité à température ambiante.

Il demeure également un besoin que ces électrolytes quasi-solides répondent aux attentes en matière de sécurité.

Il demeure également un besoin que ces électrolytes et leurs modes de synthèse soient peu onéreux et respectueux de l'environnement.

La présente invention vise précisément à répondre à ces exigences.

### Résumé de l'invention

Ainsi, l'invention concerne, selon un premier de ses aspects, un procédé pour la préparation d'un complexe de transfert de charge polymérique comprenant au moins les étapes A) et B) consistant à :
- A) mettre en contact, dans un milieu solvant et en présence d'une base de métal alcalino-terreux et/ou de métal de transition, un composé halogéné choisi parmi le chloranil (ou 2,3,5,6-tétrachlorocyclohexa-2,5-diène-1,4-dione), le fluoranil (ou 2,3,5,6-tétrafluorocyclohexa-2,5-diène-1,4-dione), le bromanil (ou 2,3,5,6-tétrabromocyclohexa-2,5-diène-1,4-dione), le iodanil (ou 2,3,5,6-tétraiodocyclohexa-2,5-diène-1,4-dione) (et de préférence le chloranil), avec au moins un composé de formule (III) :

   NC-R^{b}-CN (III),

   dans laquelle R^{b} désigne un motif hydrocarboné divalent, linéaire ou ramifié, saturé ou insaturé, comprenant de 1 à 10 atomes de carbone, de préférence 1 à 4 atomes de carbone, plus préférentiellement 1 atome de carbone ;
   pour former un sel d'anion organique et de métal alcalino-terreux et/ou de métal de transition de formule (I) tel que décrit ci-après ; puis
- **B)** mettre en contact ledit sel d'anion organique avec un moins un polymère donneur d'électrons pour former un complexe de transfert de charge polymérique, en particulier ledit polymère donneur d'électrons possède un motif de répétition de formule (IV) suivante : 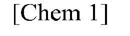 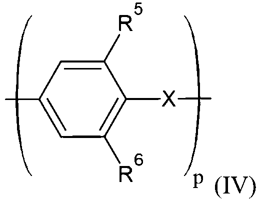 dans laquelle :
   - R⁵ et R⁶, indépendamment l'un de l'autre désignent un hydrogène ou un motif alkyle comprenant de 1 à 6 atomes de carbone, de préférence R⁵ et R⁶ désignent un groupe méthyle ;
   - X désigne O, S ou NH, de préférence X désigne S ;
   - p désigne un nombre entier allant de 15 à 35, de préférence de 16 à 31.

Comme il ressort des exemples qui suivent, les inventeurs ont constaté qu'il est possible d'obtenir des CTC polymériques selon un procédé simple en deux étapes qui a en outre l'avantage de mener à un électrolyte quasi-solide possédant une bonne stabilité à température ambiante et ayant en outre l'avantage de considérer, à titre de matières premières, des produits disponibles commercialement, peu onéreux et à impact très réduit à l'égard de l'environnement.

Le sel d'anion organique et de métal alcalino-terreux et/ou de métal de transition obtenu à l'étape A) est un sel de formule (I) : 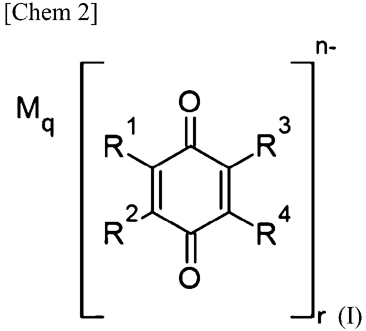 dans laquelle :
- M désigne un métal alcalino-terreux et/ou de transition multivalent ;
- n représente la charge de l'anion associé, égale à la somme des charges des motifs anioniques présents, et a une valeur de 1, 2 ou 3 ;
- r désigne un nombre entier allant de 1 à 6 ;
- q désigne un nombre entier allant de 1 à 3, sa valeur étant ajustée pour neutraliser la charge négative du composé de formule (I) ;
- R¹, R², R³, R⁴ désignent indépendamment l'un de l'autre un radical choisi parmi :
   - un atome d'halogène choisi parmi chlore, fluor, brome, iode, et
   - les motifs dinitrile anioniques de formule (IIIa) :

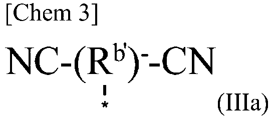

dans laquelle * désigne la fixation de la liaison covalente avec le cycle et R^{b'} désigne un motif hydrocarboné trivalent, linéaire ou ramifié, saturé ou insaturé, comprenant de 1 à 10 atomes de carbone, de préférence 1 à 4 atomes de carbone, plus préférentiellement 1 atome de carbone ;
avec l'un au moins des radicaux R¹, R², R³, R⁴ étant différent dudit atome d'halogène. Selon un mode de réalisation particulier, le sel de formule (I) tel que décrit précédemment comprend un unique radical R¹, R², R³ ou R⁴ différent dudit atome d'halogène.

Selon un mode de réalisation particulier, le sel de formule (I) tel que décrit précédemment comprend deux radicaux R¹, R², R³ ou R⁴, de préférence identiques, plus préférentiellement identiques et situés en para l'un de l'autre, différents dudit atome d'halogène.

Selon un mode de réalisation, la substitution nucléophile d'au moins un composé de formule (III) sur ledit composé halogéné (de préférence le chloranil) est réalisée en présence d'une base de métal alcalino-terreux et/ou de métal de transition choisie parmi les hydroxydes de métaux alcalino-terreux et/ou de métal de transition et les hydrures de métaux alcalino-terreux et/ou de métal de transition.

Selon un autre de ses aspects, la présente invention se rapporte à l'utilisation d'un complexe de transfert de charge polymérique obtenu selon le procédé de l'invention à titre d'électrolyte, notamment d'électrolyte quasi-solide.

Selon un autre de ses aspects, la présente invention se rapporte à un électrolyte, notamment pour systèmes électrochimiques, comprenant un composé de formule (V) suivante : 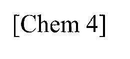 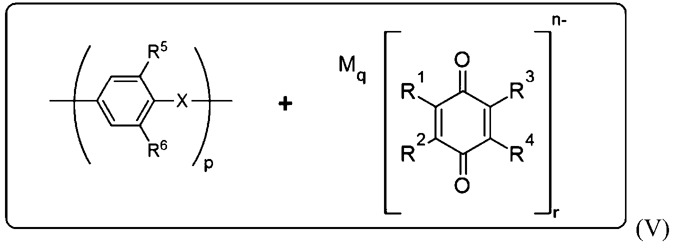 dans laquelle :
- R⁵, R⁶, X et p sont tels que définis dans la formule (IV) telle que décrite précédemment et ci-dessous ;
- M, n, r, q, R¹, R², R³, R⁴ sont tels que définis dans la formule (I) telle que décrite précédemment et ci-dessous.

D'autres caractéristiques, variantes et avantages des procédés, molécules et électrolytes selon l'invention, de leur préparation et de leur mise en œuvre ressortiront mieux à la lecture de la description, des exemples qui vont suivre, donnés à titre illustratif et non limitatif de l'invention.

Dans la suite du texte, les expressions « compris entre « ... et ... », « allant de ... à ... » et « variant de ... à ... » sont équivalentes et entendent signifier que les bornes sont incluses, sauf mention contraire.

Sauf indication contraire, l'expression « comportant/comprenant un(e) » doit être comprise comme « comportant/comprenant au moins un(e) ».

### Brève description des dessins

[Fig 1] présente un graphe de la conductivité ionique (en S.cm⁻¹) en fonction du temps (en heures) de l'électrolyte préparé selon l'exemple 2, pour différentes pressions (55 MPa et 306 MPa) à une température de 23 °C.
[Fig 2] présente un graphe de chronoampérométrie de la cellule tout-solide préparée selon l'exemple 2 montrant l'évolution de l'intensité du courant (en µA) en fonction du temps (en secondes), pour différentes pressions (55 MPa et 306 MPa) à une température de 23 °C.

### Description détaillée de l'invention

### PROCÉDÉ DE L'INVENTION

Comme précisé ci-dessus, le procédé selon l'invention est caractérisé par les étapes A) et B) décrites précédemment.

De préférence, le sel d'anion organique et de métal alcalino-terreux et/ou de métal de transition obtenu à l'étape A) est un sel de formule (I) : 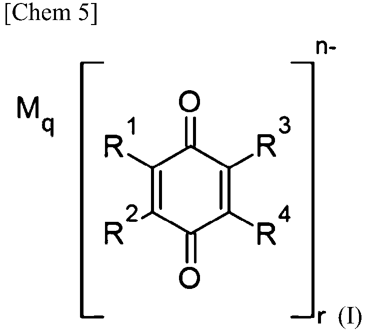 dans laquelle :
- M désigne Mg²⁺, Ca²⁺, Zn²⁺ ;
- n, r, q, R¹, R², R³, R⁴ sont tels que définis précédemment.

Ainsi, dans l'étape A), il peut être considéré que la réaction dudit composé halogéné (de préférence le chloranil) avec le composé de formule (III) relève d'une ou plusieurs substitutions nucléophiles aromatiques selon le nombre de motifs anioniques attendus au sein du sel d'anion organique et de métal alcalino-terreux et/ou de métal de transition obtenu. En particulier, le nombre de substitutions nucléophiles sera adapté selon le nombre de motifs de formule (IIIa) attendus au sein du sel de formule (I). Ainsi, dans le cas d'une monosubsitution, la réaction dudit composé halogéné (de préférence le chloranil) avec le composé de formule (III) NC-R^{b}-CN mènera audit composé halogéné porteur d'un motif dinitrile anionique de formule (IIIa) dans lequel R^{b'} dérive du motif R^{b}.

Il est entendu que la quantité en composé de formule (III) est ajustée au regard du niveau de substitution nucléophile désiré sur ledit composé halogéné (de préférence le chloranil). Cet ajustement relève des compétences de l'homme du métier. Pour une monosubstitution, on privilégiera un mélange équimolaire dudit composé halogéné (de préférence le chloranil) et du composé de formule (III) choisi. Pour une disubstitution, on privilégiera un mélange dans lequel le composé de formule (III) est à raison d'au moins 2 équivalents pour 1 équivalent dudit composé halogéné (de préférence le chloranil).

Les composés de formule (III) NC-R^{b}-CN, avec R^{b} tel que décrit précédemment, sont notamment choisis parmi les (C₃-C₁₀)alkyldinitriles linéaires ou ramifiés, saturés ou insaturés, et leurs mélanges et en particulier parmi le propanedinitrile (ou malononitrile), le butanedinitrile (ou succinonitrile), le pentanedinitrile (ou glutaronitrile), l'hexanedinitrile (ou adiponitrile), l'heptanedinitrile (ou pimélonitrile), l'octanedinitrile (ou subéronitrile), le nonanedinitrile (ou azélanitrile), le décanedinitrile (ou sébaconitrile), et leurs mélanges, plus préférentiellement le composé (III) est le malononitrile.

L'ordre de mise en contact dudit composé halogéné (de préférence le chloranil) avec au moins un composé de formule (III) peut varier. Ainsi, le composé de formule (III) peut être ajouté à une suspension ou solution dudit composé halogéné (de préférence le chloranil), ou alors ledit composé halogéné (de préférence le chloranil) peut être ajouté à une suspension ou solution de composé (III). De préférence, le composé de formule (III), notamment associé à une base telle que détaillée ci-après, est ajouté à une suspension ou solution dudit composé halogéné (de préférence le chloranil).

Comme précisé ci-dessus, la réaction selon l'invention est effectuée en présence d'une base de métal alcalino-terreux et/ou de métal de transition déterminant la nature du cation M dans le complexe de transfert de charge synthétisé et dans le sel d'anion organique et de métal alcalino-terreux et/ou de métal de transition, en particulier sel de formule (I), obtenu à l'étape A).

Cette base de métal alcalino-terreux et/ou de métal de transition est de préférence un hydroxyde de métal alcalino-terreux et/ou de métal de transition ou un hydrure de métal alcalino-terreux et/ou de métal de transition.

Comme hydroxydes de métaux alcalino-terreux et/ou de métal de transition, on peut citer l'hydroxyde de magnésium Mg(OH)₂, l'hydroxyde de calcium Ca(OH)₂, l'hydroxyde de zinc Zn(OH)₂, hydratés ou non, et leurs mélanges.

Comme hydrures de métaux alcalino-terreux et/ou de métal de transition, on peut citer l'hydrure de magnésium MgH₂, l'hydrure de calcium CaH₂, l'hydrure de zinc ZnH₂, et leurs mélanges.

Le choix de la quantité en base de métal alcalino-terreux et/ou de métal de transition à mettre en œuvre relève des compétences de l'homme du métier. Par exemple, 0,5 à 3 équivalents de base, voire 0,9 à 2 équivalents de base, peuvent être utilisés pour 1 équivalent de composé de formule (III).

De préférence, l'hydroxyde de métal alcalino-terreux et/ou de métal de transition ou l'hydrure de métal alcalino-terreux et/ou de métal de transition seul ou en présence d'un composé de formule (III) est ajouté au milieu réactionnel comprenant ledit réactif composé halogéné (de préférence le chloranil). L'hydroxyde de métal alcalino-terreux et/ou de métal de transition ou l'hydrure de métal alcalino-terreux et/ou de métal de transition peut être ajouté au milieu réactionnel en une unique fois ou en plusieurs fois en cours de synthèse.

Selon une variante de réalisation, le procédé met en œuvre ledit composé halogéné (de préférence le chloranil) avec du malononitrile à titre de composé de formule (III), et en présence d'un hydrure de métal alcalino-terreux et/ou de métal de transition.

Comme précisé ci-dessus, l'étape de mise en contact lors de l'étape A) est réalisée dans un milieu solvant. Le choix de ce milieu solvant relève clairement des compétences de l'homme du métier.

Comme exemples de milieux solvants convenant lors de l'étape A), on peut citer les solvants volatils, tels que l'acétone, l'acétonitrile, le tétrahydrofurane (THF), en particulier le THF anhydre, et leurs mélanges.

Par solvant volatil, on entend un solvant possédant une pression de vapeur saturante à 20 °C supérieure ou égale à 3 kPa.

On peut également citer les solvants non volatils, comme l'eau ou un mélange hydroalcoolique, par exemple un mélange éthanol-eau, ou isopropanol-eau.

De préférence, le milieu solvant convenant lors de l'étape A) est choisi parmi l'acétonitrile, le tétrahydrofurane (THF), en particulier le THF anhydre, et leurs mélanges, plus préférentiellement parmi le tétrahydrofurane (THF), en particulier le THF anhydre.

De préférence, le milieu réactionnel est maintenu, dans des conditions standard de pression, à une température allant de -5 °C à 100 °C, plus particulièrement de -5 °C à 95 °C, mieux de 0 °C à 90 °C, étant entendu que la température peut être maintenue à une certaine température au départ de la réaction, puis être augmentée, puis être abaissée. Selon un mode de réalisation particulier, la température est maintenue à température ambiante au début de la réaction, puis est augmentée, en particulier jusqu'à atteindre 75 °C.

Avantageusement, la durée de la réaction dépend de la nature chimique du composé de formule (III) impliqué, et varie entre 5h et 35h, de préférence entre 10h et 30h, plus préférentiellement entre 15h et 30h. Durant toute la durée de la réaction, le milieu réactionnel est avantageusement maintenu sous agitation.

Selon le procédé de l'invention, on obtient à l'issue de l'étape A) un mélange contenant le sel d'anion organique et de métal alcalino-terreux et/ou de métal de transition attendu, généralement en solution ou en suspension dans le milieu réactionnel.

Le procédé selon l'invention comprend avantageusement une étape de purification consécutive à la réaction permettant de récupérer le produit de la réaction décrite à l'étape A) exempt d'impureté(s).

Cette étape de purification peut comprendre une évaporation du milieu solvant, suivie d'une resolubilisation dans un solvant différent.

Cette étape de purification peut également comprendre une étape de filtration du milieu réactionnel ou de la solution obtenue lors d'une resolubilisation précédente. Selon la solubilité du produit de la réaction, le résidu de la filtration ou alors le filtrat obtenu après filtration peuvent être récupérés.

L'étape de purification peut également comprendre une étape d'ajout d'un solvant au milieu réactionnel ou au résidu ou au filtrat obtenus lors d'une étape de filtration précédente. Comme exemples de solvants utiles, on peut citer, sous forme anhydre ou non, le THF, le dichlorométhane (DCM), le pentane, l'acétonitrile, l'acétone, le méthanol, et leurs mélanges. Le solvant peut être ajouté sous forme anhydre afin de limiter l'introduction d'eau dans le milieu réactionnel, résidu ou filtrat obtenu. Lors de cette étape, le solvant peut être ajouté afin de suspendre le résidu en vue d'une seconde filtration/rinçage. Le solvant peut également être ajouté jusqu'à obtenir un milieu réactionnel ou un filtrat limpide, qui peut ensuite être concentré, en particulier à l'évaporateur rotatif ou en étant placé sous vide.

L'étape de purification peut comprendre une étape de dessication, c'est-à-dire un séchage à l'étuve, sous pression réduite à l'évaporateur rotatif et/ou sous vide, ou alors un séchage à l'aide d'un ou plusieurs agents desséchants, comme par exemple du pentoxyde de phosphore P₂O₅.

L'étape de purification peut également comprendre une étape de sublimation(s), c'est-à-dire d'une ou plusieurs sublimations successives, visant à éliminer ledit réactif composé halogéné (de préférence le chloranil) non réagi.

L'ensemble de ces modes opératoires, de même que leurs conditions réactionnelles, relèvent clairement des compétences de l'homme du métier.

Une fois l'étape de purification terminée, on obtient le produit de la réaction décrite à l'étape A) pur, qui peut être caractérisé par spectroscopie d'absorption infrarouge à transformée de Fourier ou FTIR (de l'anglais *Fourier Transform InfraRed Spectroscopy),* spectroscopie de résonance magnétique nucléaire au carbone (¹³C RMN), ou encore spectrométrie de masse haute résolution (HR-MS, de l'anglais *Electrospray Ionization - Mass Spectrometry*).

Le procédé permet ainsi de préparer un sel d'anion organique et de métal alcalino-terreux et/ou de métal de transition tel que décrit précédemment.

Comme indiqué précédemment, le sel d'anion organique et de métal alcalino-terreux et/ou de métal de transition peut être un sel de formule (I) tel que décrit précédemment.

Selon un mode de réalisation particulier, le sel de formule (I) tel que décrit précédemment comprend un unique radical R¹, R², R³ ou R⁴ différent d'un atome d'halogène.

Selon une variante de ce mode de réalisation, l'unique radical R¹, R², R³, R⁴ différent dudit atome d'halogène désigne un motif anionique malononitrile.

Selon une autre variante de ce mode de réalisation, le sel d'anion organique et de métal alcalino-terreux et/ou de métal de transition tel que décrit précédemment répond à la formule (Ia) suivante : 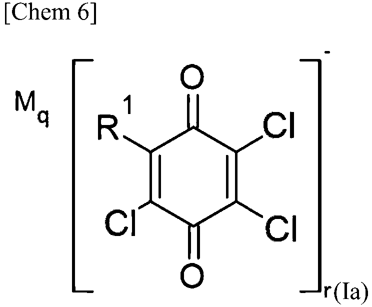 dans laquelle M, q, R¹, et r sont tels que définis précédemment, de préférence R¹ désigne un motif anionique malononitrile.

Dans cette variante, n est égal à 1 puisque seul le radical R¹ est différent du chlore : la charge anionique est donc présente au niveau de ce radical R¹. La valeur de q étant ajustée pour neutraliser la charge négative du composé de formule (Ia), q est avantageusement égal à 0,5r, avec r allant de 2 à 6.

Selon un autre mode de réalisation particulier, le sel de formule (I) tel que décrit précédemment comprend deux radicaux R¹, R², R³, R⁴, de préférence identiques, plus préférentiellement identiques et situés en para l'un de l'autre, différents dudit atome d'halogène.

Selon un autre mode de réalisation particulier, le sel de formule (I) tel que décrit précédemment comprend trois radicaux R¹, R², R³, R⁴, de préférence identiques, différents dudit atome d'halogène.

À titre représentatif des sels de formule (I) et (Ia), peuvent être tout particulièrement cités les sels ci-dessous dans lesquels M²⁺ désigne Mg²⁺, Ca²⁺ et/ou Zn²⁺ :

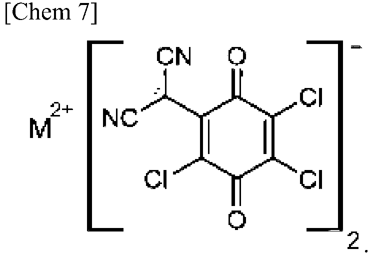

Le procédé selon l'invention s'avère ainsi tout particulièrement avantageux pour préparer les sels de formule (I) et (Ia) suivants :
- le sel de calcium du bis(2,3,5-trichloro-6-propanedinitrile-1,4-benzoquinone) (composé A) :

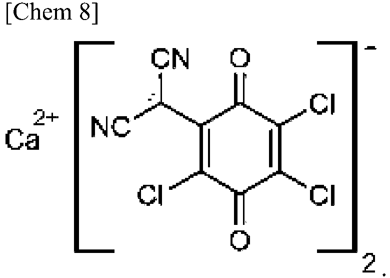

Comme précisé ci-dessus, l'étape B) consiste à mettre en contact ledit sel d'anion organique et de métal alcalino-terreux et/ou de métal de transition avec au moins un polymère donneur d'électrons pour former un complexe de transfert de charge polymérique.

Selon un mode de réalisation particulier, un sel de formule (I) ou (Ia) est mis en contact avec au moins un polymère donneur d'électrons pour former un complexe de transfert de charge polymérique.

Par « polymère donneur d'électrons », on entend un polymère qui possède des groupes fonctionnels ou des segments de chaîne capables de céder des électrons à d'autres molécules ou ions. Notamment, la présence de segments de chaîne riches en électrons, tels que des cycles aromatiques, en particulier conjugués, possédant des orbitales de haute énergie caractérise un polymère donneur d'électrons, c'est-à-dire un polymère apte à céder des électrons à des composés accepteurs d'électrons.

De préférence, le polymère donneur d'électrons de l'invention possède un motif de répétition de formule (IV) suivante : 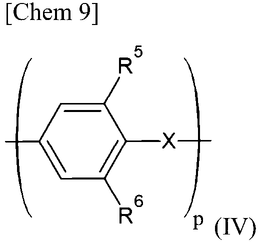 dans laquelle :
- R⁵ et R⁶, indépendamment l'un de l'autre désignent un hydrogène ou un motif alkyle comprenant de 1 à 6 atomes de carbone, de préférence R⁵ et R⁶ désignent un groupe méthyle ;
- X désigne O, S ou NH, de préférence X désigne S ;
- p désigne un nombre entier allant de 15 à 35, de préférence de 16 à 31.

Avantageusement, la valeur de p est telle que la masse molaire en nombre (Mn) du polymère va de 1 000 à 3 500, plus préférentiellement de 1 500 à 3 000, encore plus préférentiellement de 1 750 à 2 750 et/ou telle que la masse molaire en masse (Mw) du polymère donneur d'électrons de l'invention va de 2 000 à 6 000, plus préférentiellement de 2 500 à 5 500, encore plus préférentiellement de 3 000 à 5 000.

Plus préférentiellement, le polymère donneur d'électrons de l'invention est choisi parmi le poly(sulfure de 1,4-phénylène) ou PPS (de l'anglais *polyphenylene sulfide*), le poly(thio-2,6-diméthyl-1,4-phénylène) ou PMPS (de l'anglais *poly(2,6-dimethyl-1,4-phenylenesulfide)*), et le poly(oxyde de 1,4-phénylène) ou PPO (de l'anglais *polyphenylene oxide*), et leurs mélanges.

Encore plus préférentiellement, le polymère donneur d'électrons de l'invention est le poly(thio-2,6- diméthyl-1,4-phénylène).

L'ajustement de la quantité de polymère donneur d'électrons au regard de la quantité du sel d'anion organique et de métal alcalino-terreux et/ou de métal de transition tel que décrit précédemment relève des compétences de l'homme du métier.

Avantageusement, à l'étape B), le rapport molaire de la quantité molaire de sel d'anion organique et de métal alcalino-terreux et/ou de métal de transition selon l'invention sur la quantité molaire de polymère donneur d'électrons selon l'invention va de 0,1:99,9 à 15:85, plus préférentiellement de 0,5:99,5 à 10:90, encore plus préférentiellement de 1:99 à 7,5:92,5, mieux le rapport molaire est de 5:95.

La mise en contact décrite dans l'étape B) peut se faire en milieu solvant ou non. Lorsque la mise en contact a lieu dans un milieu solvant, le choix de ce milieu solvant relève clairement des compétences de l'homme du métier.

Les exemples de milieux solvants convenant à l'invention sont les mêmes que ceux cités précédemment dans le cadre de l'étape A).

De préférence, le milieu solvant convenant lors de l'étape B) est choisi parmi le tétrahydrofurane (THF), en particulier le THF anhydre.

De préférence, lors de l'étape B), le milieu réactionnel est maintenu, dans des conditions standard de pression, à une température allant de température ambiante (c'est-à-dire environ 23 °C) à 80 °C, plus particulièrement de 30 °C à 70 °C, mieux de 40 °C à 60 °C, étant entendu que la température peut être maintenue à une certaine température au départ de la réaction, puis modifiée.

La durée de la réaction décrite à l'étape B) varie entre 1h et 12h, de préférence entre 3h et 10h, plus préférentiellement entre 5h et 8h. Durant toute la durée de la réaction, le milieu réactionnel est avantageusement maintenu sous agitation.

Le procédé selon l'invention comprend avantageusement une étape de purification telle que décrite précédemment, consécutive à la réaction permettant de récupérer le produit de la réaction décrite à l'étape B), c'est-à-dire le complexe de transfert de charge polymérique selon l'invention, exempt d'impureté(s).

Le procédé peut également comprendre une étape de broyage au mortier du résidu obtenu lors d'une étape de dessication précédente, qui peut s'effectuer après l'étape A) ou l'étape B).

Le procédé de l'invention peut en outre comprendre une étape C), ultérieure aux étapes A) et B), consistant à ajouter un agent plastifiant au complexe de transfert de charge polymérique selon l'invention.

L'agent plastifiant est utilisé en vue de diminuer la température de transition vitreuse du complexe de transfert de charge polymérique et ainsi de l'assouplir. Le complexe de transfert de charge obtenu à l'étape C) n'est plus un solide mais un solide viscoélastique.

Comme plastifiants pouvant être utilisés dans le cadre de l'invention, on peut notamment citer les composés de sulfones, notamment les composés comportant un groupe sulfonyle S(=O)₂ et de 2 à 15 atomes de carbone, en particulier le sulfolane, le thiétane-1,1-dioxyde ; les composés dinitriles, notamment les composés organiques comportant de 3 à 10 atomes de carbone, en particulier le succinonitrile.

De préférence, l'agent plastifiant est le sulfolane.

L'ajustement de la quantité de sulfolane au regard de la quantité de complexe de transfert de charge polymérique relève des compétences de l'homme du métier.

Avantageusement, à l'étape C), le rapport molaire de la quantité molaire d'agent plastifiant sur la quantité molaire de complexe de transfert de charge polymérique selon l'invention va de 1:99 à 30:70, plus préférentiellement de 2:98 à 25:75, encore plus préférentiellement de 5:95 à 20:80, mieux le rapport molaire est de 14:86.

Le procédé selon l'invention comprend avantageusement une étape d'homogénéisation, consécutive à l'étape C).

Une telle étape d'homogénéisation peut comprendre le mélange du complexe de transfert de charge et de l'agent plastifiant à l'aide d'une spatule, voire à l'aide d'un appareil mécanique comme un agitateur mécanique, en particulier un appareil vortex.

Ainsi, le procédé de l'invention peut comprendre au moins une étape de purification à l'issue des étapes A), B) et/ou C), et/ou une étape d'homogénéisation consécutive à l'étape C).

### UTILISATION DES COMPOSES OBTENUS SELON L'INVENTION COMME ELECTROLYTE

L'électrolyte selon l'invention, notamment pour systèmes électrochimiques, comprend un complexe polymérique de formule (V) tel que décrit précédemment.

Selon un mode de réalisation, l'électrolyte selon l'invention, notamment pour systèmes électrochimiques, comprend un complexe polymérique de formule (V) tel que décrit précédemment obtenu selon le procédé tel que décrit précédemment.

Avantageusement, l'électrolyte selon l'invention comprend un complexe polymérique de formule (V) et un agent plastifiant tels que décrits précédemment.

Les complexes de transfert de charge polymériques tels que décrits précédemment peuvent être avantageusement utilisés en tant qu'électrolytes quasi-solides, notamment en tant que matrices polymères.

L'électrolyte selon l'invention peut être mis en œuvre dans un système électrochimique, par exemple une batterie cation-ion, tel qu'une batterie magnésium-ion, calcium-ion, ou zinc-ion.

L'invention concerne donc également un système électrochimique comprenant un électrolyte selon l'invention.

Les complexes de transfert de charge polymériques selon l'invention sont donc utiles afin d'obtenir des batteries magnésium-ion, calcium-ion ou zinc-ion qui offrent une alternative aux batteries lithium-ion, de façon à s'affranchir des métaux critiques comme le lithium.

Selon un mode de réalisation particulier, l'électrolyte est mis en œuvre dans une batterie, en particulier une batterie au magnésium, une batterie au calcium, ou une batterie au zinc.

La présente invention concerne également, selon un autre de ses aspects, l'utilisation de sels d'anion organique et de métal alcalino-terreux et/ou de métal de transition, en particulier de sels de formule (I) ou (Ia), comme électrolytes, notamment pour systèmes électrochimiques.

L'invention va maintenant être décrite au moyen des exemples suivants, soumis à titre illustratif et non limitatif de l'invention.

### Exemples

### EXEMPLE 1

### Synthèse du composé A (Ca(MaloCA)₂) selon l'invention

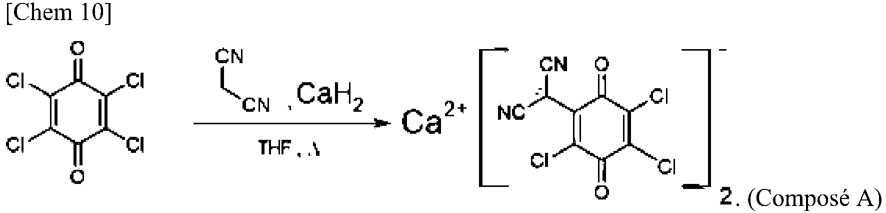

Une solution de malononitrile (405 mg, 6,13 mmol, purifié par sublimation) dans 5 mL de THF anhydre est préparée en boîte-à-gants sous atmosphère d'argon. À cette solution, on ajoute de l'hydrure de calcium (249,1 mg, 5,74 mmol, pur à 97%). La suspension obtenue est ensuite ajoutée à une suspension de chloranil (1,41 g, 5,69 mmol) dans 10 mL de THF, préparée dans un Schlenk de 100 mL. L'hydrure de calcium est récupéré par plusieurs rinçages pour un volume total de 35 mL. La solution est sortie de la boîte-à-gants et agitée sous argon à température ambiante pendant environ 1h, prenant progressivement une teinte verte puis bleue. Elle est ensuite agitée à reflux à 75 °C pendant 18h. Après refroidissement à température ambiante, le THF est évaporé. Le résidu est resolubilisé dans de l'acétone et filtré sur Celite^{®}. Le produit est resuspendu dans une solution de dichlorométhane/pentane (ratio 1:1), collecté et rincé abondamment avec du dichlorométhane. Le produit est séché sous vide poussé (< 0,1 mBar) à 80 °C pendant 17h30. Le chloranil non réagi est éliminé par trois sublimations successives, et le composé A, appelé Ca(MaloCA)₂, est obtenu sous la forme d'un solide bleu sombre (1,09 g, rendement = 65 %).

La pureté du produit a été confirmée par FTIR, ¹³C RMN et HR-MS.

RMN (400 MHz, DMSO-d₆) ¹³C: δ: 175.86, 165.26, 142.29, 142.10, 135.93, 120.32, 108.04, 48.90 ppm.

HR-MS(-) : m/z = 272.90. [C₉N₂O₂Cl₃]- : Masse théorique = 272.90.

FTIR : v = 2217, 1683, 1605, 1509, 1220, 1097, 718, 602 cm⁻¹.

### EXEMPLE 2

### Préparation de l'électrolyte PMPS/Ca(MaloCA)₂ et propriétés électrochimiques

Le composé A Ca(MaloCA)₂, synthétisé à l'exemple 1 (233 mg, 90,2 µmol) est mélangé sous atmosphère d'argon avec du poly(thio-2,6-diméthyl-1,4-phénylène) (PMPS, 1,71 mmol, selon un ratio molaire Ca(MaloCA)₂:PMPS de 5:95) dans 4 mL de THF.

Le mélange est placé sous agitation durant la nuit à 50 °C, puis séché sous pression réduite (< 0,1 mBar) pendant 5h30 à 80 °C. Le produit obtenu est broyé au mortier, puis séché à nouveau sous pression réduite pendant environ 24h à 80 °C.

68,8 mg de produit est ajouté à 11,2 mg de sulfolane pour obtenir un électrolyte quasi-solide noir contenant 14 % en masse de sulfolane. Le mélange est homogénéisé à la spatule, puis agité au vortex à vitesse maximale pendant 1 minute.

L'électrolyte quasi-solide est ensuite incorporé au sein d'une cellule tout-solide. La cellule est montée sous atmosphère inerte en boîte à gants. Environ 20 mg d'électrolyte quasi-solide sont introduits à l'intérieur d'une céramique creuse avec un diamètre d'ouverture de 10 mm et compressé entre deux électrodes cylindriques en acier inoxydable, formant une pastille friable d'environ 300 nm d'épaisseur. Le bon contact entre l'électrolyte et les électrodes est assuré avec une vis à tête plate qui est serrée avec un couple contrôlé grâce à une clé dynamométrique. La cellule tout-solide est scellée sous atmosphère inerte et les propriétés de conductivité des électrolytes sont étudiées par Spectroscopie d'Impédance Electrochimique et par Chronoampérométrie.

Le comportement électrochimique est évalué par spectroscopie d'impédance : des diagrammes de Nyquist sont obtenus pour différentes pressions à une température de 23 °C.

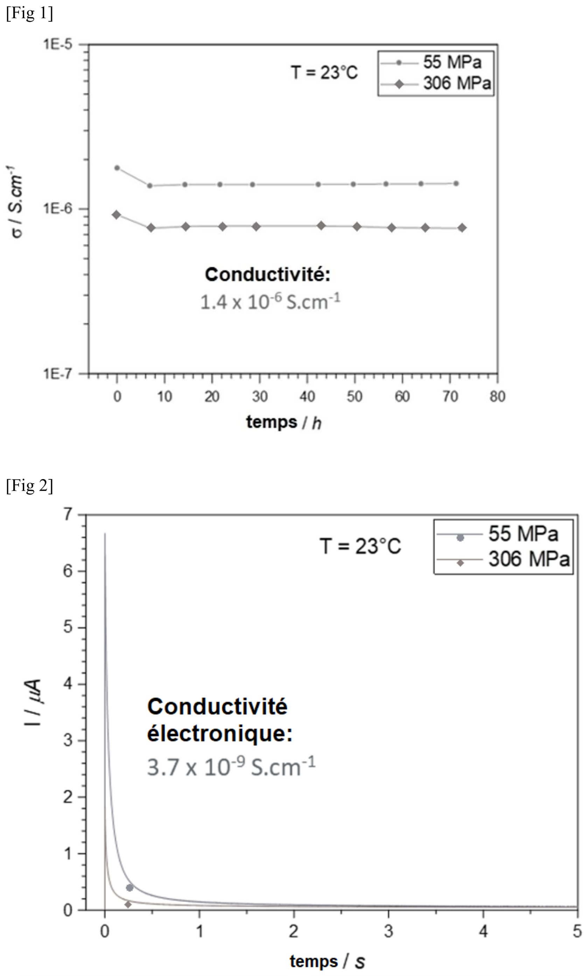

La figure 1 est obtenue par analyse de ces diagrammes de Nyquist. La figure 1 représente l'évolution de la conductivité ionique en fonction du temps pour l'électrolyte selon l'invention, pour différentes pressions à une température de 23 °C. Cette figure montre la stabilité de la conductivité ionique dudit électrolyte dans le temps. Ainsi, la figure 1 démontre que le système est stable et que la conductivité ne varie pas significativement. Les électrolytes selon l'invention sont donc des systèmes tables et fiables dans le temps.

Enfin, des tests de chronoampérométrie sont effectués à différentes pressions à une température de 23 °C afin d'évaluer l'évolution du courant en fonction du temps. La courbe obtenue est représentée dans la figure 2. La figure 2 démontre que la conductivité mesurée par la spectroscopie d'impédance est bien de nature ionique et non électronique.

### Liste des documents cités

[1] Hatakeyama-Sato K., Tezuka T., Umeki M., Oyaizu K. 2020. AI-Assisted Exploration of Superionic Glass-Type Li+ Conductors with Aromatic Structures, J. Am. Chem. Soc., 142, 3301-3305.
[2] Hatakeyama-Sato K., Umeki M., Adachi H., Kuwata N., Hasegawa G., Oyaizu K. 2022. Exploration of organic superionic glassy conductors by process and materials informatics with lossless graph database, npj Comput Mater, 8, Art. no 1.
[3] Bonnick P., Redko M., Wang C., Frey M., Jones M., Wang S., Allred G., Ling C., Sugiura R., Muldoon J. 2023. An Exploration of the Role of Charge-Transfer Complexes in Polymer Electrolytes, ACS Energy Lett., 8, 4251-4258.
[4] Zimmerman M. A. 2017. Solid ionically conducting polymer material, US20170018781A1.
[5] Zimmerman M. A. 2018. Lithium metal battery with solid polymer electrolyte, US20180151914A1.

## Revendications

1. Procédé pour la préparation d'un complexe de transfert de charge polymérique comprenant au moins les étapes A) et B) consistant à :
- A) mettre en contact, dans un milieu solvant et en présence d'une base de métal alcalino-terreux et/ou de métal de transition, un composé halogéné choisi parmi le chloranil, le fluoranil, le bromanil , le iodanil et leurs mélanges, avec au moins un composé de formule (III) :
NC-R^{b}-CN (III),
dans laquelle R^{b} désigne un motif hydrocarboné divalent, linéaire ou ramifié, saturé ou insaturé, comprenant de 1 à 10 atomes de carbone, de préférence 1 à 4 atomes de carbone, plus préférentiellement 1 atome de carbone ;
pour former un sel d'anion organique et de métal alcalino-terreux et/ou de métal de transition de formule (I) : 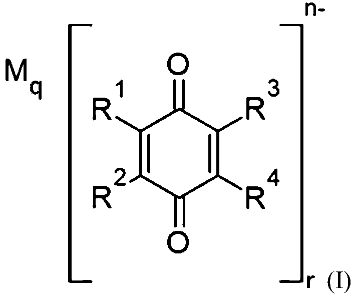
dans laquelle :
• M désigne un métal alcalino-terreux et/ou de transition multivalent choisi parmi Mg²⁺, Ca²⁺ et Zn²⁺ ;
• n représente la charge de l'anion associé, égale à la somme des charges des motifs anioniques présents, et a une valeur de 1, 2 ou 3 ;
• r désigne un nombre entier allant de 1 à 6 ;
• q désigne un nombre entier allant de 1 à 3, sa valeur étant ajustée pour neutraliser la charge négative du composé de formule (I) ;
• R¹, R², R³, R⁴ désignent indépendamment l'un de l'autre un radical choisi parmi :
- un atome d'halogène choisi parmi chlore, fluor, brome, iode et
- les motifs dinitrile anioniques de formule (IIIa) : 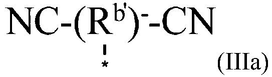
dans laquelle * désigne la fixation de la liaison covalente avec le cycle et R^{b'} désigne un motif hydrocarboné trivalent, linéaire ou ramifié, saturé ou insaturé, comprenant de 1 à 10 atomes de carbone, de préférence 1 à 4 atomes de carbone, plus préférentiellement 1 atome de carbone ;
avec l'un au moins des radicaux R¹, R², R³, R⁴ étant différent dudit atome d'halogène ; puis
- **B)** mettre en contact ledit sel d'anion organique avec un moins un polymère donneur d'électrons pour former un complexe de transfert de charge polymérique, en particulier ledit polymère donneur d'électrons possède un motif de répétition de formule (IV) suivante : 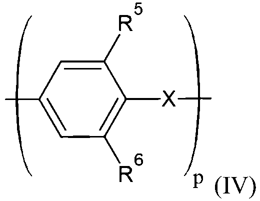 dans laquelle :
- R⁵ et R⁶, indépendamment l'un de l'autre désignent un hydrogène ou un motif alkyle comprenant de 1 à 6 atomes de carbone, de préférence R⁵ et R⁶ désignent un groupe méthyle ;
- X désigne O, S ou NH, de préférence X désigne S ;
- p désigne un nombre entier allant de 15 à 35, de préférence de 16 à 31.

2. Procédé selon la revendication 1, dans lequel le sel de formule (I) comprend un unique radical R¹, R², R³ ou R⁴ différent dudit atome d'halogène.

3. Procédé selon l'une quelconque des revendications 1 à 2, dans lequel le sel d'anion organique et de métal alcalino-terreux et/ou de métal de transition répond à la formule (Ia) suivante : 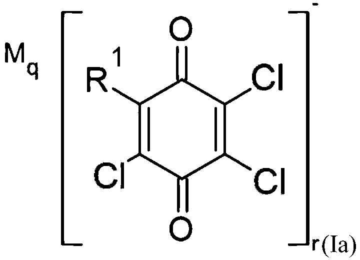 dans laquelle M, q, R¹, et r sont tels que définis dans la revendication 2, de préférence R¹ désigne un motif anionique malononitrile et q est avantageusement égal à 0,5r, avec r allant de 2 à 6.

4. Procédé selon l'une quelconque des revendications précédentes, dans lequel ladite base est choisie parmi les hydroxydes de métaux alcalino-terreux et/ou de métal de transition, comme l'hydroxyde de magnésium Mg(OH)₂, l'hydroxyde de calcium Ca(OH)₂, l'hydroxyde de zinc Zn(OH)₂, hydratés ou non, et leurs mélanges, et les hydrures de métaux alcalino-terreux et/ou de métal de transition, comme l'hydrure de magnésium MgH₂, l'hydrure de calcium CaH₂, l'hydrure de zinc ZnH₂, et leurs mélanges.

5. Procédé selon l'une quelconque des revendications précédentes, dans lequel, à l'étape B), le rapport molaire de la quantité molaire de sel d'anion organique et de métal alcalino-terreux et/ou de métal de transition sur la quantité molaire de polymère donneur d'électrons va de 0,1:99,9 à 15:85, plus préférentiellement de 0,5:99,5 à 10:90, encore plus préférentiellement de 1:99 à 7,5:92,5, mieux le rapport molaire est de 5:95.

6. Procédé selon l'une quelconque des revendications précédentes, dans lequel, à l'étape A), le milieu solvant est choisi parmi l'acétonitrile, le tétrahydrofurane et leurs mélanges, plus préférentiellement parmi le tétrahydrofurane.

7. Procédé selon l'une quelconque des revendications précédentes, comprenant en outre une étape C), ultérieure aux étapes A) et B), consistant à ajouter un agent plastifiant, de préférence le sulfolane, au complexe de transfert de charge polymérique.

8. Procédé selon l'une quelconque des revendications précédentes, dans lequel, à l'étape C), le rapport molaire de la quantité molaire d'agent plastifiant sur la quantité molaire de complexe de transfert de charge polymérique va de 1:99 à 30:70, plus préférentiellement de 2:98 à 25:75, encore plus préférentiellement de 5:95 à 20:80, mieux le rapport molaire est de 14:86.

9. Procédé selon l'une quelconque des revendications précédentes, comprenant en outre au moins une étape de purification à l'issue des étapes A), B) et/ou C), et/ou une étape d'homogénéisation consécutive à l'étape C).

10. Utilisation d'un complexe de transfert de charge polymérique obtenu selon le procédé décrit selon l'une quelconque des revendications 1 à 9, à titre d'électrolyte, notamment d'électrolyte quasi-solide.

11. Électrolyte, notamment pour systèmes électrochimiques, comprenant un composé de formule (V) suivante : 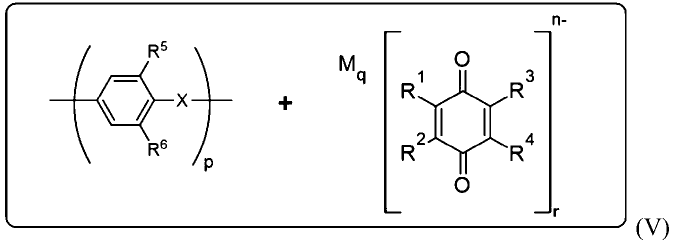 dans laquelle :
- R⁵, R⁶, X et p sont tels que définis dans la revendication 1 ;
- M, n, r, q, R¹, R², R³, R⁴ sont tels que définis dans la revendication 1.

12. Électrolyte selon la revendication 11 obtenu par le procédé selon l'une quelconque des revendications 1 à 10.

13. Système électrochimique comprenant un électrolyte selon la revendication 11 ou 12.

14. Utilisation de sels d'anion organique et de métal alcalino-terreux et/ou de métal de transition, en particulier de sels de formule (I) ou (Ia) telles que décrites dans l'une quelconque des revendications 1 à 3, comme électrolytes, notamment pour systèmes électrochimiques.
